# EUROPEAN PATENT SPECIFICATION

(11) **EP 2 716 484 B1**
(45) Date of publication and mention of the grant of the patent: **14.09.2016**
(21) Application number: 11866492.9
(22) Date of filing: 30.05.2011
(51) Int. Cl.: B60K 15/03, E02F 9/00

(54) **FUEL TANK FOR HEAVY CONSTRUCTION EQUIPMENT**
KRAFTSTOFFTANK FÜR SCHWERE BAUMASCHINEN
RÉSERVOIR DE CARBURANT POUR ÉQUIPEMENT DE CONSTRUCTION LOURD

(43) Date of publication of application: 09.04.2014
(73) Proprietor: Volvo Construction Equipment AB, 631 85 Eskilstuna (SE)
(72) Inventor: LEE, Taek-Woo, Gimhae-si Gyeongsangnam-do 621-070 (KR)
(74) Representative: Epping - Hermann - Fischer
(86) International application number: PCT/KR2011/003951
(87) International publication number: WO 2012/165668

(56) References cited:
- EP-A1- 1 158 158
- WO-A1-2007/031455
- JP-A- 6 320 964
- JP-A- 2009 519 397
- KR-A- 20060 025 057
- US-A1- 2004 159 602
- US-A1- 2005 045 233

## Description

### TECHNICAL FIELD

The present invention relates to a fuel tank for a construction machine. More particularly, the present invention relates to a fuel tank for a construction machine, which can prevent a diesel heater from being inoperable due to an inflow of moisture that is generated within a fuel tank of the construction machine, such as an excavator, in an extremely cold area (e.g., work environment in temperatures below -15°C) and make the moisture within the fuel tank be filtered through a water separator and be supplied to an engine side.

### BACKGROUND ART

Generic US 2005/0045233 A1 discloses a fuel tank for a vehicle having a fuel injection system. Said fuel tank comprises:
a fuel tank body and a fuel feed pipe operatively attached to the fuel tank body, wherein the fuel feed pipe has a pickup inlet opening into the fuel tank body for supplying fuel flow therethrough for said fuel injection system. The fuel tank further comprises a fuel return pipe operatively attached to said fuel tank body and having a return port opening inside said fuel tank body for returning unused fuel from said fuel injection system to said fuel tank body, wherein the return port of said fuel return pipe is directed toward said inlet of said fuel feed pipe.

WO 2007/031455 A1 discloses a flange for sealing an opening of a fuel tank of a motor vehicle. The flange comprises a wall, an external side of the wall, which side is to be arranged for arrangement on the external side of the fuel tank, and an internal side of the wall, which side faces the interior of the fuel tank in the designated installation position. At least one electronic component is arranged on a printed circuit board in a region separated from the fuel, which region is the external side of the flange, in that a heat-conducting element is formed integrally with a carrier of the printed circuit board, and in that at least the heat-conducting element is guided as far as the internal side.

EP 1 158 158 A1 discloses a PTC heating device for a gaseous or liquid medium to be heated, preferably diesel fuel. The heating device has a housing part, on which a PTC element held in contact with at least one contact plate is disposed, and has a spring element, which generates a contact pressure between the contact plate and the PTC element. The housing has at least one holding web disposed at the circumference of the PTC element, characterised in that the holding web is so formed that it engages around a section of the spring element to generate the contact pressure.

In general, diesel fuel that is used in a diesel engine has the characteristics that if an outdoor temperature is lowered below -15°C in winter seasons, paraffinic wax components are extracted from the fuel due to freezing phenomena in the fuel, and fuel flexibility is greatly deteriorated in comparison to that at room temperature. Further, if the diesel engine starts to be driven in a state where the paraffinic wax components are extracted from the diesel fuel, the extracted wax components, which are sucked into the engine, may clog filter paper in a fuel filter as the wax components pass through the fuel filter, and this may cause engine start inferiority of the machine, engine stalling, white smoke generation, and the like. On the other hand, about 20% of the fuel that is supplied from the fuel tank to the engine side is injected and combusted, and the remaining 80% of the fuel returns to the fuel tank.

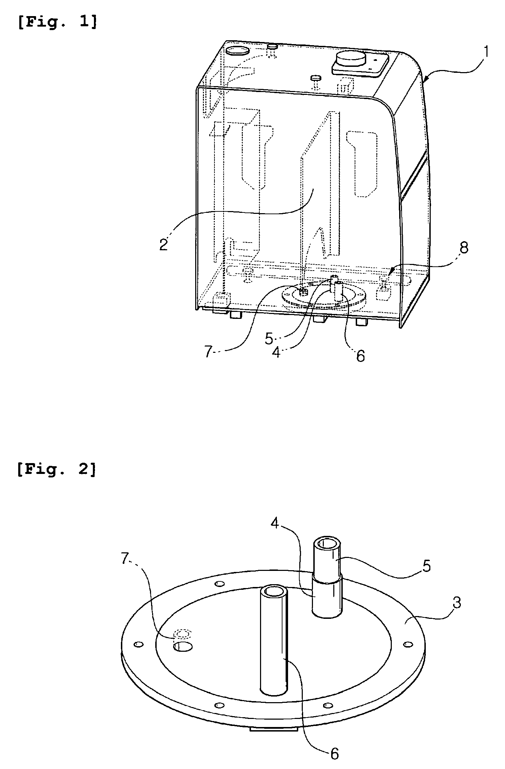

A fuel tank for a construction machine in the related art, as illustrated in FIGS. 1 and 2, includes a baffle plate 2 formed inside the fuel tank 1 to prevent fuel flow during movement of the machine; a lower cover 3 mounted on a through hole formed on a bottom surface of the fuel tank to keep sealing without leaking fuel; a fuel suction port 4 mounted on the lower cover 3 to communicate with a fuel suction pipe so as to supply the fuel from the fuel tank 1 to an engine side; a suction filter 5 mounted on the fuel suction port 4 to filter contaminants included in the fuel; a diesel heater fuel suction port 6 mounted on the lower cover 3 to communicate with a diesel heater suction pipe of a line of the fuel that is supplied to a diesel heater which generates heat using a cooling water in the engine and enables a fan in a cab to operate before a work starts in order to improve the work condition in the cab in an extremely cold area; a drain port 7 mounted on the lower cover 3 to discharge the moisture included in the fuel; and a fuel return port 8 mounted on the bottom surface in the fuel tank 1 to communicate with a fuel return pipe so as to make the fuel from the engine side return to the fuel tank 1.

During working using an excavator or the like in an extremely cold area, moisture (which may be water drops) may be formed on an inner surface of the fuel tank 1 that is made of a metal plate due to an external temperature change and may be mixed with the fuel in the fuel tank for a construction machine in the related art. Further, due to the exhaust gas emission regulations of the machine, the temperature of the fuel that returns from the engine side to the fuel tank 1 is further increased, and thus the moisture condensation rate is relatively heightened. Due to this, the high-temperature fuel that returns to the fuel tank 1 through the fuel return port 8 is mixed with the fuel in the fuel tank 1, and in this process, the high-temperature fuel is cooled to cause the moisture to be generated.

Further, since the fuel return port 8 is positioned adjacent to the fuel suction ports 4 and 6, the fuel that returns to the fuel tank 1 through the fuel return port 8 stirs moisture grains that are precipitated on the bottom surface of the fuel tank 1, and thus the moisture that flows in the fuel tank 1 is mixed with the fuel.

In this case, most of the moisture that is mixed with the fuel in the fuel tank 1 is discharged out of the fuel tank 1 through the drain port 7.

In contrast, if the engine is in a stop state due to the completion of work, small moisture grains, which freely fall in the fuel tank 1, may easily flow through an inlet (that is formed to be exposed upwardly) of the diesel heater suction port 6 and may be supplied to the diesel heater. Accordingly, if the engine is not operated for a long time in an extremely cold area (i.e., if the engine is in an off state through the night), the moisture that flows through the diesel heater suction pipe is collected at the lowest position of the diesel heater fuel line and then is frozen to cause the diesel heater to be inoperable. Accordingly, reserved natural ignition of the diesel heater is not performed, and thus the heater function is not performed in the cabin to cause difficulty to an operator.

### DISCLOSURE

### TECHNICAL PROBLEM

Therefore, the present invention has been made to solve the above-mentioned problems occurring in the related art, and one subject to be achieved by the present invention is to provide a fuel tank for a construction machine, which can prevent a diesel heater from being inoperable due to an inflow of moisture that is generated due to moisture condensation in the fuel tank into a diesel heater fuel line in the case where the machine is in an engine-off state for a long time in an extremely cold area, and make the moisture within the fuel tank be filtered through a water separator, so that a reserved operation of a diesel heater can be performed smoothly.

### TECHNICAL SOLUTION

In accordance with an aspect of the present invention, there is provided a fuel tank for a construction machine, which includes a baffle plate formed inside the fuel tank to prevent fuel flow during movement of the machine; a lower cover mounted on a through hole formed on a bottom surface of the fuel tank to keep sealing without leaking fuel; a fuel suction port mounted on the lower cover to communicate with a fuel suction pipe so as to supply the fuel from the fuel tank to an engine side; a suction filter mounted on the fuel suction port to filter contaminants included in the fuel; a diesel heater fuel suction port mounted on the lower cover and having an inlet that is formed to be bent toward the bottom surface of the fuel tank so that moisture, which is generated and dropped within the fuel tank in the case where the machine in an engine-off state is put in an extremely cold area, is prevented from flowing into the inlet and being supplied to a diesel heater suction pipe; a drain port mounted on the lower cover to discharge the moisture included in the fuel; and a fuel return port mounted on the bottom surface in the fuel tank to communicate with a fuel return pipe so as to make the fuel from the engine side return to the fuel tank.

### ADVANTAGEOUS EFFECT

The fuel tank for a construction machine according to an embodiment of the present invention as described above has the following advantages.

If the machine is in an engine-off state for a long time in an extremely cold area, the moisture generated within the fuel tank is prevented from flowing into the diesel heater fuel line due to the shape change of the diesel heater fuel suction port in the fuel tank that communicates with the diesel heater suction pipe, and thus smooth operation of the diesel heater can be secured. Further, the moisture that is mixed with the fuel in the fuel tank is filtered through the water separator, and thus the engine can start smoothly.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a schematic view of a fuel tank for a construction machine in the related art;
Fig. 2 is a schematic view of a lower cover that is mounted on a bottom surface of a fuel tank for a construction machine in the related art;
Fig. 3 is a schematic view of a fuel tank for a construction machine according to an embodiment of the present invention; and
Fig. 4 is a schematic view of a lower cover that is mounted on a bottom surface of a fuel tank for a construction machine according to an embodiment of the present invention.

* Description of Reference Numerals in the Drawing
- 1:: fuel tank
- 2:: baffle plate
- 3:: lower cover
- 4:: fuel suction port
- 5:: suction filter
- 7:: drain port
- 8:: fuel return port
- 9:: diesel heater suction port

### BEST MODE

Now, a preferred embodiment of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

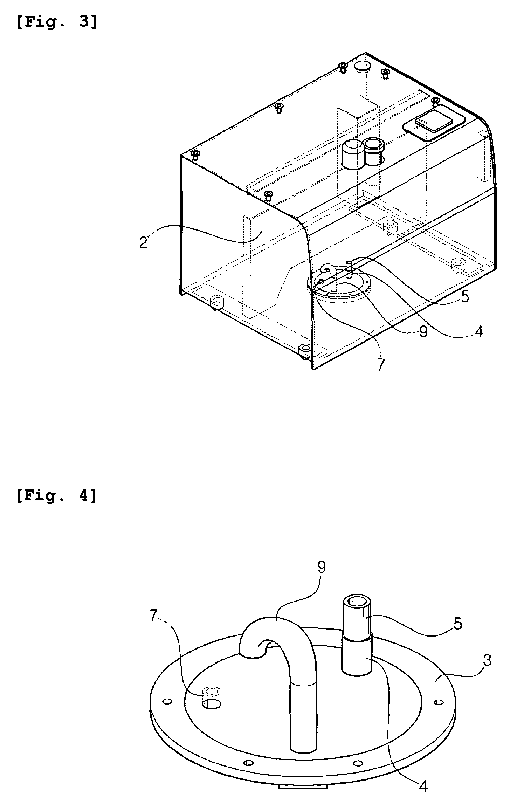

A fuel tank for a construction machine according to an embodiment of the present invention, as illustrated in FIGS. 3 and 4, includes a baffle plate 2 formed inside the fuel tank 1 to prevent fuel flow during movement of the machine; a lower cover 3 mounted on a through hole formed on a bottom surface of the fuel tank to keep sealing without leaking fuel; a fuel suction port 4 mounted on the lower cover 3 to communicate with a fuel suction pipe (not illustrated) so as to supply the fuel from the fuel tank 1 to an engine side; a suction filter 5 mounted on the fuel suction port 4 to filter contaminants (e.g., contaminants, such as scale and the like) included in the fuel; a diesel heater fuel suction port 9 mounted on the lower cover 3 and having an inlet that is formed to be bent toward the bottom surface of the fuel tank 1 so that moisture, which is generated and dropped within the fuel tank 1 in the case where the machine in an engine-off state is put in an extremely cold area, is prevented from flowing into the inlet and being supplied to a diesel heater suction pipe; a drain port 7 mounted on the lower cover 3 to discharge the moisture included in the fuel; and a fuel return port 8 mounted on the bottom surface in the fuel tank 1 to communicate with a fuel return pipe (not illustrated) so as to make the fuel from the engine side return to the fuel tank 1.

Since the configuration of the fuel tank 1, except for the diesel heater fuel suction port 9 mounted on the lower cover 3, is substantially the same as the configuration of the fuel tank illustrated in FIGS. 1 and 2, the detailed explanation of the configuration and operation thereof will be omitted, and the same reference numerals are used for the same configurations.

Hereinafter, the use example of the fuel tank for a construction machine according to an embodiment of the present invention will be described in detail with reference to the accompanying drawings.

As illustrated in FIGS. 3 and 4, if the machine, such as an excavator, that is in an engine-off state, is put in an extremely cold area over the night after the work using the excavator is completed, moisture is generated in a process in which high-temperature fuel that returns from the engine side to the fuel tank 1 is mixed with the fuel in the fuel tank 1, and due to the difference between the temperature of the fuel and an outdoor temperature, moisture is generated on the inner surface of the fuel tank 1 that is made of a metal material, and is mixed with the fuel in the fuel tank 1.

As described above, even if the machine is in the engine-off state for a long time and the moisture grains, which are generated in the fuel tank 1, fall freely, the moisture grains can be prevented from flowing into the diesel heater suction pipe. That is, since the inlet of the diesel heater fuel suction port 9, which is mounted on the lower cover 3 to communicate with the diesel heater suction pipe, is formed to be bent toward the bottom surface of the fuel tank 1, the moisture, which is generated and dropped within the fuel tank 1 due to the condensation thereof, is prevented from flowing into the inlet of the diesel heater fuel suction port 9.

Accordingly, the moisture that is generated within the fuel tank 1 is prevented from being supplied to the diesel heater suction pipe through the diesel heater fuel suction port 9, and thus the diesel heater can be prevented from being inoperable. In this case, since the fuel that is mixed with the moisture in the fuel tank 1 is transported to the water separator through the fuel suction port 4 and the fuel suction pipe, the fuel can be supplied to the engine side after the moisture that is mixed with the fuel is removed through the fuel filter of the water separator.

### INDUSTRIAL APPLICABILITY

As apparent from the above description, according to the fuel tank for a construction machine according to the embodiment of the present invention, if the machine is put in an engine-off state in an extremely cold area, the moisture that is generated within the fuel tank is prevented from flowing into the suction pipe of the diesel heater due to the shape change of the diesel heater fuel suction port in the fuel tank, and thus the smooth operation of the diesel heater can be secured. Further, since the moisture in the fuel tank is filtered through the water separator, the reserved operation of the diesel heater can be performed smoothly.

## Claims

1. A fuel tank (1) for a construction machine comprising:
a baffle plate (2) formed inside the fuel tank (1) to prevent fuel flow during movement of the machine;
a fuel return port (8) mounted on the bottom surface in the fuel tank (1) to communicate with a fuel return pipe so as to make the fuel from the engine side return to the fuel tank (1);
a fuel suction port (4) mounted on the lower cover (3) to communicate with a fuel suction pipe so as to supply the fuel from the fuel tank (2) to an engine side; and
a suction filter (5) mounted on the fuel suction port (4) to filter contaminants included in the fuel;
**characterized in that**
a lower cover (3) mounted on a through hole formed on a bottom surface of the fuel tank (1) to keep sealing without leaking fuel;
a diesel heater fuel suction port (9) mounted on the lower cover (3) and having an inlet that is formed to be bent toward the bottom surface of the fuel tank (1) so that moisture, which is generated and dropped within the fuel tank (1) in the case where the machine in an engine-off state is put in an extremely cold area, is prevented from flowing into the inlet and being supplied to a diesel heater suction pipe; and
a drain port (7) mounted on the lower cover (3) to discharge the moisture included in the fuel.

## Patentansprüche

1. Kraftstofftank (1) für eine Baumaschine, aufweisend:
ein im Innern des Kraftstofftanks (1) gebildetes Prallblech (2), um einen Kraftstofffluss während Bewegung der Maschine zu verhindern;
einen an der Bodenfläche in dem Kraftstofftank (1) befestigten Kraftstoffrückführungsanschluss (8), um mit einer Kraftstoffrückführleitung zu kommunizieren, um den Kraftstoff von der Motorseite dazu zu veranlassen, zu dem Kraftstofftank (1) zurückzukehren;
einen an der unteren Abdeckung (3) befestigten Kraftstoff-Ansauganschluss (4), um mit einer Kraftstoffansaugleitung zu kommunizieren, um den Kraftstoff von dem Kraftstofftank (2) an eine Motorseite zuzuführen; und
einen an dem Kraftstoffansauganschluss (4) befestigten Ansaugfilter (5), um im Kraftstoff beinhaltete Verunreinigungen zu filtern;
**dadurch gekennzeichnet, dass**
eine untere Abdeckung (3) an einer an einer Bodenfläche des Kraftstofftanks (1) gebildeten Durchgangsöffnung befestigt ist, um eine Abdichtung ohne Leckage von Kraftstoff beizubehalten;
ein Ansauganschluss eines Dieselkraftstofferhitzers (9) an der unteren Abdeckung (3) befestigt ist und einen Einlass aufweist, der gebildet ist, um hin zu der Bodenfläche des Kraftstofftanks (1) gebogen zu sein, so dass in dem Kraftstofftank (1) erzeugte und in diesen eintropfende Feuchtigkeit, in dem Fall, in dem die Maschine in einem Zustand mit ausgeschaltetem Motor in einen extrem kalten Bereich verbracht wird, daran gehindert wird, in den Einlass zu strömen und einer Ansaugleitung eines Dieselerhitzers zugeführt zu werden; und
einen an der unteren Abdeckung (3) befestigten Ablaufanschluss (7), um die im Kraftstoff beinhaltete Feuchtigkeit abzuleiten.

## Revendications

1. Réservoir à carburant (1) destiné à une machine de construction comprenant :
un déflecteur (2) formé à l'intérieur du réservoir à carburant (1) afin d'empêcher l'écoulement de carburant pendant le mouvement de la machine ;
un orifice de retour de carburant (8) monté sur la surface inférieure dans le réservoir à carburant(1) afin de communiquer avec un tuyau de retour de carburant afin de faire retourner le carburant du côté moteur vers le réservoir à carburant (1) ;
un orifice d'aspiration de carburant (4) monté sur le couvercle inférieur (3) afin de communiquer avec un tuyau d'aspiration de carburant afin d'alimenter le carburant du réservoir à carburant (2) vers un côté moteur ; et
un filtre d'aspiration (5) monté sur l'orifice d'aspiration de carburant (4) afin de filtrer les contaminants contenus dans le carburant ;
**caractérisé en ce que**
un couvercle inférieur (3) monté sur un trou de passage formé sur une surface inférieure du réservoir à carburant (1) afin de maintenir une étanchéité sans fuite de carburant ;
un orifice d'aspiration de carburant à dispositif de chauffage Diesel (9) monté sur le couvercle inférieur (3) et possédant une admission qui est formée afin d'être coudée vers la surface inférieure du réservoir à carburant (1) de sorte que l'humidité qui est générée et goutte à l'intérieur du réservoir à carburant (1) dans le cas où la machine à l'état d'arrêt du moteur est mise dans une zone extrêmement froide, est empêchée de s'écouler dans l'admission et d'être livrée à un conduit d'aspiration de dispositif de chauffage Diesel ; et
un orifice de drainage (7) monté sur le couvercle inférieur (3) afin d'évacuer l'humidité comprise dans le carburant.
